(19) **Europäisches Patentamt**
**European Patent Office**
**Office européen des brevets**

(11) **EP 4 404 530 A1**

(12) **EUROPEAN PATENT APPLICATION**

(43) Date of publication:
24.07.2024 Bulletin 2024/30

(21) Application number: 23208485.5

(22) Date of filing: 08.11.2023

(51) International Patent Classification (IPC):
*H04L 47/193* (2022.01)        *H04L 69/16* (2022.01)

(52) Cooperative Patent Classification (CPC):
H04L 47/32; H04L 43/0894; H04L 43/50;
H04L 47/125; H04L 47/34; H04L 69/161;
H04L 43/0829; H04L 43/0864

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **20.01.2023 CN 202310072265**

(71) Applicant: **Airoha Technology (Suzhou) Limited Suzhou City Jiangsu 215021 (CN)**

(72) Inventor: **LIU, Tao Suzhou City 215021 (CN)**

(74) Representative: **Hoefer & Partner Patentanwälte mbB Pilgersheimer Straße 20 81543 München (DE)**

(54) **DEVICE AND METHOD FOR ACHIEVING IMPROVED NETWORK SPEED TEST RESULT BY PREVENTING TRANSMISSION CONTROL PROTOCOL PACKETS FROM BEING RE-TRANSMITTED AND REDUCING PROCESSOR LOAD**

(57) A computer device (102) includes a network interface circuit (116), a storage device (112), and a processor (114). The network interface circuit (116) receives a plurality of first transmission control protocol, TCP, packets. The storage device (112) stores a program code. The processor (114) loads and executes the program code to perform the following operations: instructing the network interface circuit (116) to transmit a plurality of second TCP packets to another computer device (104), and calculating a network speed of a network used by the computer device (102) according to data amount of the first TCP packets. The second TCP packets include a second TCP packet and another second TCP packet that are sequentially transmitted. The second TCP packet and the another second TCP packet are acknowledgement packets of a first TCP packet and another first TCP packet, respectively, and have discontinuous sequence numbers.

FIG. 1

## Description

Background of the Invention

1. Field of the Invention

The present invention relates to network communications between different computer devices, and more particularly, to an device and method for achieving an improved network speed test result by preventing transmission control protocol (TCP) packets from being re-transmitted and reducing a processor load.

2. Description of the Prior Art

TCP is a protocol belonging to the transport layer, and is also an end-to-end transmission protocol (also called a host-to-host or progress-to-progress transmission protocol). In other words, computer devices at both ends of TCP can communicate with each other to ensure the integrity of the transmitted data and provide control of the transmission rate, where these actions involve communications between the computer devices at both ends only, and have nothing to do with any nodes located between the computer devices at both ends, such as router(s) or switch(es). TCP ensures integrity and reliability of TCP packets transmitted over the network through two mechanisms, including acknowledgement and re-transmission. Hence, the overall process of TCP packet transmission will be less efficient, but it can ensure that TCP packets are correctly transmitted from a transmit (TX) end to a receive (RX) end. However, for certain applications, such a feature is not necessary. For example, for an application of performing a network speed test, an optical network unit (ONU) can run a hypertext transfer protocol (HTTP) client to visit an HTTP server on Internet for measuring a network speed. For example, when the client's network speed becomes slow, the client may want to perform a network speed test to measure the current network bandwidth (e.g., a download speed). Since HTTP belongs to the application layer which is stacked above the transport layer, TCP at the transport layer is therefore responsible for ensuring that the data can be delivered to the destination correctly. When the RX end discovers packet loss, it will request the TX end to perform TCP packet re-transmission. However, when the latency on the network is greater, that is, the time difference between sending a TCP packet from the TX end and receiving an acknowledgement (ACK) packet from the RX end (also known as the round-trip time (RTT)) is larger, the percentage of TCP packet loss increases, which at the same time reduces the packet exchange efficiency between the TX end and the RX end. As a result, if the RTT is larger, the TCP performance will be lower, which makes it impossible to measure the actual download speed of the client.

Furthermore, compared with a processor with powerful computing power on the HTTP server, the ONU on the client often uses a processor with weaker computing power due to cost considerations. In order to allow the ONU to measure a more accurate download speed, the ONU will use the large receive offload (LRO) method, which means that the hardware of the ONU will help to aggregate multiple packets, each being smaller than the Maximum Transmission Unit (MTU), into a very large packet and send it to the processor. Assuming that the number of aggregated packets is 12, the number of packets to be processed by the processor can be reduced to 1/12. However, when there is a lot of packet loss on the network (e.g., a large number of packets are lost when the optical line termination (OLT) performs download speed limit on the ONU), the number of aggregated packets will be reduced under this case, which increases the number of packets to be processed by the processor. As a result, the ONU is unable to accurately measure the current network bandwidth because its processor is busy. For example, when the OLT implements a 7.5Gbps download speed limit on the ONU, the network speed measurement result obtained by the ONU operating under a high processor load condition is much lower than the download speed limit value of the ONU.

Summary of the Invention

One of the objectives of the claimed invention is to provide a device and method for achieving an improved network speed test result by preventing transmission control protocol (TCP) packets from being re-transmitted and reducing a processor load. Computer devices and methods according to the invention are defined in the independent claims. The dependent claims define preferred embodiments thereof.

According to a first aspect of the present invention, an exemplary computer device is disclosed. The exemplary computer device includes a network interface circuit, a storage device, and a processor. The network interface circuit is arranged to receive a plurality of first TCP packets from another computer device. The storage device is arranged to store a program code. The processor is arranged to load and execute the program code to perform following operations: instructing the network interface circuit to transmit a plurality of second TCP packets to the another computer device, wherein the plurality of second TCP packets comprise a second TCP packet and another second TCP packet that are sequentially transmitted, the second TCP packet is an acknowledgement (ACK) packet corresponding to a first TCP packet included in the plurality of first TCP packets, the another second TCP packet is an ACK packet corresponding to another first TCP packet included in the plurality of first TCP packets, and the first TCP packet and the another first TCP packet have discontinuous sequence numbers; and computing a network speed of a network used by the computer device according to a data amount of the plurality of first TCP packets.

According to a second aspect of the present invention, an exemplary computer device is disclosed. The exemplary computer device includes a network interface circuit, a storage device, and a processor. The storage device is arranged to store a program code. The processor is arranged to load and execute the program code to perform following operations: instructing the network interface circuit to transmit a first TCP packet to another computer device; and after instructing the network interface circuit to transmit the first TCP packet to the another computer device, instructing the network interface circuit to transmit another first TCP packet to the another computer device; wherein the network interface circuit is further arranged to receive a second TCP packet from the another computer device, and the second TCP packet is an ACK packet corresponding to the another first TCP packet; and before the network interface circuit receives the second TCP packet, the network interface circuit does not receive an ACK packet corresponding to the first TCP packet.

According to a third aspect of the present invention, an exemplary TCP packet processing method employed by a computer device is disclosed. The exemplary TCP packet processing method includes: receiving a plurality of first TCP packets from another computer device; transmitting a plurality of second TCP packets to the another computer device, wherein the plurality of second TCP packets comprise a second TCP packet and another second TCP packet that are sequentially transmitted, the second TCP packet is an ACK packet corresponding to a first TCP packet included in the plurality of first TCP packets, the another second TCP packet is an ACK packet corresponding to another first TCP packet included in the plurality of first TCP packets, and the first TCP packet and the another first TCP packet have discontinuous sequence numbers; and computing a network speed of a network used by the computer device according to a data amount of the plurality of first TCP packets.

According to a fourth aspect of the present invention, an exemplary TCP packet processing method employed by a computer device is disclosed. The exemplary TCP packet processing method includes: transmitting a first TCP packet to another computer device; after transmitting the first TCP packet to the another computer device, transmitting another first TCP packet to the another computer device; and receiving a second TCP packet from the another computer device, wherein the second TCP packet is an ACK packet corresponding to the another first TCP packet, and before the second TCP packet is received, an ACK packet corresponding to the first TCP packet is not received.

These and other objectives of the present invention will no doubt become obvious to those of ordinary skill in the art after reading the following detailed description of the preferred embodiment that is illustrated in the various figures and drawings.

Brief Description of the Drawings

FIG. 1 is a diagram illustrating a network system according to an embodiment of the present invention.
FIG. 2 is a sequence diagram illustrating a modified TCP flow according to an embodiment of the present invention.
FIG. 3 is a sequence diagram illustrating a download speed test according to an embodiment of the present invention.

Detailed Description

Certain terms are used throughout the following description and claims, which refer to particular components. As one skilled in the art will appreciate, electronic equipment manufacturers may refer to a component by different names. This document does not intend to distinguish between components that differ in name but not in function. In the following description and in the claims, the terms "include" and "comprise" are used in an open-ended fashion, and thus should be interpreted to mean "include, but not limited to ... ". Also, the term "couple" is intended to mean either an indirect or direct electrical connection. Accordingly, if one device is coupled to another device, that connection may be through a direct electrical connection, or through an indirect electrical connection via other devices and connections.

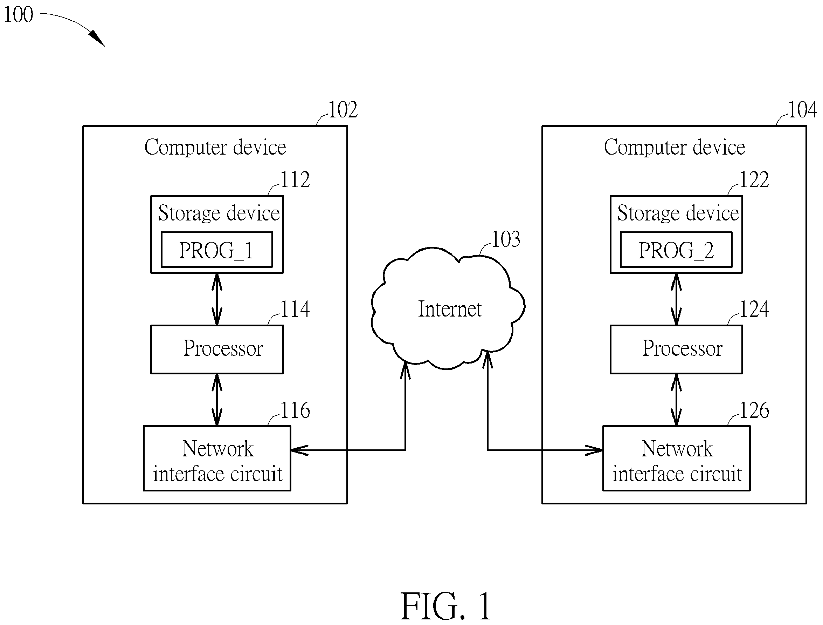

FIG. 1 is a diagram illustrating a network system according to an embodiment of the present invention. The network system 100 includes a plurality of network devices (e.g., computer devices 102 and 104) . The computer devices 102 and 104 may perform data exchange over Internet 103. For example, the computer device 102 may act as a client, and the computer device 104 may act as a server. The computer device 102 includes a storage device 112, a processor 114 and a network interface circuit 116. It should be noted that only the components pertinent to the present invention are illustrated in FIG. 1. In practice, the computer device 102 may include additional components to achieve other functions. The storage device 112 may be a memory or any component with data storage capability, and may be used to store a program code PROG_1. For example, the program code PROG_1 may include a program code of an operating system (OS) and a program code of an application (e.g., network speed test software (client edition)) . The processor 114 may be used to load and execute the program code PROG_1 to control operations of the computer device (e.g., client) 102. For example, part or all of operations that are related to the computer device (e.g., client) 102 and included in the TCP packet processing method proposed by the present invention may be realized by the program code PROG_1 running on the processor 114. The network interface circuit 116 includes hardware of the transmit (TX) circuit and the receive (RX) circuit, and can be used to access the Internet 103. For example, the computer device 102 may be connected to the Internet 103 via the network provided by the network operator.

The computer device 104 includes a storage device 122, a processor 124 and a network interface circuit 126. It should be noted that only the components pertinent to the present invention are illustrated in FIG. 1. In practice, the computer device 104 may include additional components to achieve other functions. The storage device 122 may be a memory or any component with data storage capability, and may be used to store a program code PROG_2. For example, the program code PROG_2 may include a program code of an OS and a program code of an application (e.g., network speed test software (server edition)). The processor 124 may be used to load and execute the program code PROG_2 to control operations of the computer device (e.g., server) 104. For example, part or all of the operations that are related to the computer device (e.g., server) 104 and included in the TCP packet processing method proposed by the present invention may be realized by the program code PROG_2 running on the processor 124. The network interface circuit 126 includes hardware of the TX circuit and the RX circuit, and can be used to access the Internet 103. For example, the computer device 104 may be connected to the Internet 103 via the network provided by the network operator.

Generally speaking, all network devices can communicate with each other due to using the same series of protocol layers. When a source network device transmits a packet to a destination network device, the packet has to traverse a series of protocol layers at the source network device. When the packet arrives at the destination network device, it has to traverse the same series of protocol layers at the destination network device. When the packet moves to a lower protocol layer, the conversion applied to the packet includes encapsulation. Encapsulation means that the original packet is encapsulated by a header and then becomes a larger packet. Each protocol layer performs encapsulation for adding specific information of the protocol layer to the packet. Similarly, when the packet moves to an upper protocol layer, the header is removed by a so-called de-encapsulation process. In this embodiment, the processor 114/124 can execute the program code PROG_1/PROG_2 (e.g., program code of the OS that is a part of the program code PROG_1/PROG_2) to deal with encapsulation and de-encapsulation. In addition, the processor 114/124 can further execute the program code PROG_1/PROG_2 (e.g., program code of the network speed test software that is a part of the program code PROG_1/PROG_2) to deal with a specific application (e.g., network speed test), where data of the specific application can be transmitted and received via the physical network interface provided by the network interface circuit 116/126.

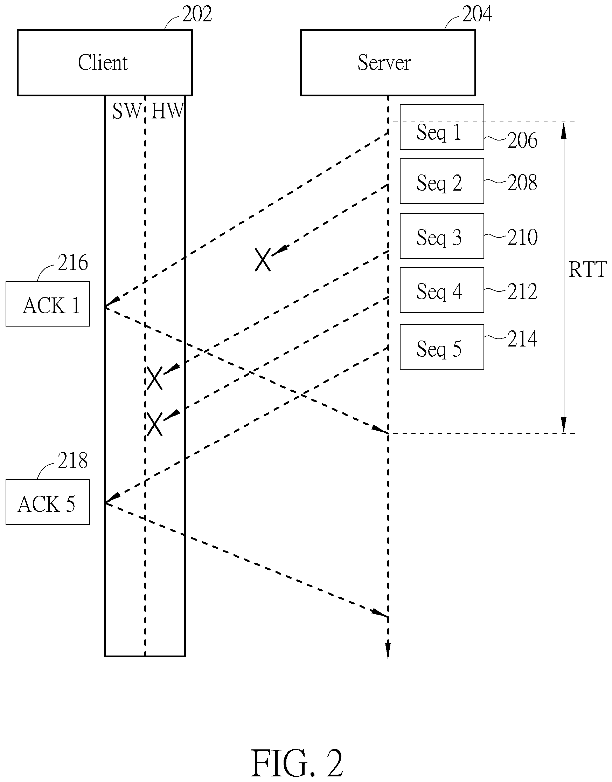

Since the network speed test does not care about integrity of data contents, there is no need to rely on the re-transmission mechanism provided by a normal TCP flow for ensuring integrity of TCP packets transmitted over the network. Based on such observation, the present invention proposes a modified TCP flow for the network speed test application (which at least includes a download speed test), which can prevent the TCP performance from being degraded by the TCP re-transmission mechanism. Please refer to FIG. 2. FIG. 2 is a sequence diagram illustrating a modified TCP flow according to an embodiment of the present invention. The client (e.g., HTTP client or ONU) 202 may be the computer device 102 shown in FIG. 1, and the server (e.g., HTTP server) 204 may be the computer device 104 shown in FIG. 1. The processor 114 of the client 202 may execute the program code PROG_1 (e.g., program code of the network speed test software (client edition) that is a part of the program code PROG_1) to start the network speed test (e.g., download speed test) . After a link is established between the client 202 and the server 204, the server 204 starts to perform data transmission for download speed test. To achieve flow control, the server 204 may transmit TCP packets according to a send window, and the client 202 may receive TCP packets according to a receive window. As shown in FIG. 2, the processor 124 of the server 204 may execute the program code PROG_2 to generate a plurality of TCP packets 206, 208, 210, 212, 214, and may instruct the network interface circuit 126 to transmit the TCP packets 206, 208, 210, 212, 214 to the client 202, sequentially, where a sequence number of the TCP packet 206 is represented by "Seq 1", a sequence number of the TCP packet 208 is represented by "Seq 2", a sequence number of the TCP packet 210 is represented by "Seq 3", a sequence number of the TCP packet 212 is represented by "Seq 4", and a sequence number of the TCP packet 214 is represented by "Seq 5". When the client 202 successfully receives the TCP packet 206, the processor 114 of the client 202 may execute the program code PROG_1 to generate a TCP packet 216 as an ACK packet corresponding to the TCP packet 206, and may instruct the network interface circuit 116 to return the TCP packet 216 to the server 204. For example, the TCP packet 216 is an ACK packet that carries an ACK number "ACK 1". The server 204 successfully receives the TCP packet (ACK packet) 216 via the network interface circuit 126. The time difference between a time point when the server 204 sends the TCP packet 206 and a time point when the server 204 receives the corresponding ACK packet from the client 202 may be called round trip time (RTT). As shown in FIG. 2, the next TCP packet 208 transmitted from the server 204 is lost during the network transmission process, so the client 202 does not successfully receive the TCP packet 208. When the client 202 successfully receives the TCP packet 210 later, the client 202 follows the modified TCP flow proposed by the present invention, and does not transmit an ACK packet that carries the ACK number "ACK 1" again in response to receiving the TCP packet 210, for triggering the server 204 to initiate re-transmission of the TCP packet 208. In this embodiment, the client 202 successfully receives all of the subsequent TCP packets 210, 212, 214 after the TCP packet 208 is lost. The client 202 may be divided into a hardware processing stage HW (e.g., network interface circuit 116) and a software processing stage SW (e.g., program code PROG_1 running on the processor 114). Since the processor 114 of the client 202 may be implemented by a processor with weaker computing power due to cost considerations, the hardware processing stage HW (e.g., network interface circuit 116) may actively discard a part (e.g., TCP packets 210 and 212) of the TCP packets that are successfully received, to prevent the speed test result from being affected by the busy processor (i.e., high processor load). In a preferred embodiment, the hardware processing stage HW (e.g., network interface circuit 116) actively and uniformly discards a part of the TCP packets that are successfully received. However, this is for illustrative purposes only, and is not meant to be a limitation of the present invention.

As mentioned above, the client 202 does not successfully receive the TCP packet 208. When successfully receiving the TCP packet 210 later, the client 202 follows the modified TCP flow proposed by the present invention, and does not transmit an ACK packet that carries the ACK number "ACK 1" again in response to receiving the TCP packet 210, for triggering the server 204 to initiate re-transmission of the TCP packet 208. Similarly, when successfully receiving the TCP packet 212 later, the client 202 follows the modified TCP flow proposed by the present invention, and does not transmit an ACK packet that carries the ACK number "ACK 1" again in response to receiving the TCP packet 212, for triggering the server 204 to initiate re-transmission of the TCP packet 208; and when successfully receiving the TCP packet 214 later, the client 202 follows the modified TCP flow proposed by the present invention, and does not transmit an ACK packet that carries the ACK number "ACK 1" again in response to receiving the TCP packet 214, for triggering the server 204 to initiate re-transmission of the TCP packet 208. Instead, the client 202 directly responds with a corresponding TCP packet 218 in response to receiving the TCP packet 214. It should be noted that the successfully received TCP packets 210 and 212 are actively discarded by the hardware processing stage HW. The processor 114 of the client 202 may execute the program code PROG_1 to generate the TCP packet 218 as an ACK packet corresponding to the TCP packet 214, and instruct the network interface circuit 116 to return the TCP packet 218 to the server 204. For example, the TCP packet 218 may be an ACK packet that carries an ACK number "ACK 5".

It should be noted that, before the network interface circuit 126 of the server 204 successfully receives the TCP packet (ACK packet) 218, the network interface circuit 126 of the server 204 does not receive an ACK packet corresponding to the TCP packet 208 (which is lost during the network transmission process) and ACK packets corresponding to the TCP packets 210, 212 (which are actively discarded after being successfully received by the client 202) . When the network interface circuit 126 of the server 204 successfully receives the TCP packet (ACK packet) 218, the server 204 deems that all of the sequentially transmitted TCP packets 206, 208, 210, 212, 214 are successfully received by the client 202. In this way, the sever 204 does not initiate re-transmission of the TCP packet 208 (i.e., the client 202 does not request re-transmission of the TCP packet 208 from the server 204) even though the TCP packet 208 is actually lost during the network transmission process. It should be noted that the TCP packets 210, 212 are actively discarded after being successfully received by the client 202. Though the server 204 does not receive ACK packets corresponding to the TCP packets 210, 212, the sever 204 does not initiate re-transmission of the TCP packets 210, 212 (i.e., the client 202 does not request re-transmission of TCP packets 210, 212 from the server 204).

In summary, even though a TCP packet transmitted from the server 204 is actually lost, the client 202 follows the modified TCP flow proposed by the present invention, and does not request TCP packet re-transmission from the server 202. In addition, the client 202 returns an ACK packet to the server 204 according to the largest sequence number (e.g., "Seq 5") among sequence numbers of all TCP packets currently received by the client 202, which ensures that the server 204 does not initiate any TCP packet re-transmission during a period in which a network speed test (which at least includes a download speed test) is running. In this way, TCP performance is protected from being affected by the network latency. In other words, even though the RTT becomes larger, the TCP performance does not degrade. Hence, with the help of the modified TCP flow proposed by the present invention, the download speed test can accurately measure an actual download speed of user's network under a variety of environments with different kinds of network latency.

Furthermore, to make the client 202 (e.g., ONU) measure a more accurate rate during download speed test, the client 202 may employ the LRO method to make the hardware (e.g., network interface circuit 116) help to aggregate multiple packets, each being smaller than the MTU, into a very large packet and send it to the processor 114. However, when there is packet loss happening on the network, the number of aggregated packets will be reduced, which increases the number of packets to be processed by the processor and affects the final speed test result. In addition to preventing TCP packets from being re-transmitted for preventing the network speed test from being affected by the packet loss, the present invention may actively discard a part (e.g., TCP packets 210 and 212) of successfully received TCP packets through the hardware (e.g., network interface circuit 116) of the client 202 (e.g., ONU), to mitigate the effect of packet loss from which the processor load and the network speed test suffers.

When the processor 114 of the client 202 (computer device 102) executes the program code PROG_1 (e.g., program code of the network speed test software (client edition) that is a part of the program code PROG_1) to start the network speed test (which at least includes a download speed test), the final network speed test result (which at least includes a download speed test result) is reported by the client 202 (computer device 102) eventually. In this embodiment, the processor 114 of the client 202 (computer device 102) executes the program code PROG_1 (e.g., program code of the network speed test software (client edition) that is a part of the program code PROG_1) to calculate the network speed of the network used by the client 202 according to a data amount of TCP packets that are successfully received by the network interface circuit 116, including successfully received TCP packets that are actively discarded. For example, the network interface circuit 116 has a counter (now shown) that is used to count the data amount of successfully received TCP packets. Hence, the processor 114 can execute the program code PROG_1 (e.g., program code of the network speed test software (client edition) that is a part of the program code PROG_1) to read statistics information of the data amount from the counter, and refer to the data amount of TCP packets actually received by the client 202 at the current time point and an elapsed time to calculate the download speed that is provided by the network.

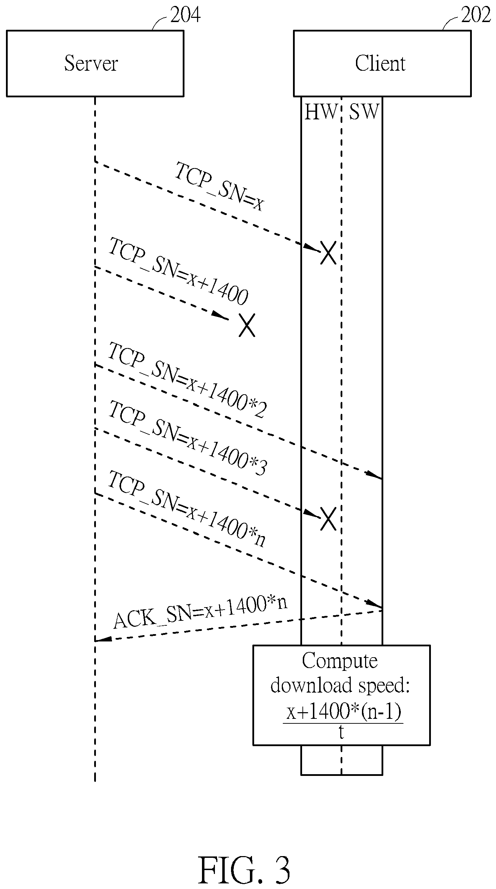

Please refer to FIG. 3. FIG. 3 is a sequence diagram illustrating a download speed test according to an embodiment of the present invention. The client (e.g., HTTP client or ONU) 202 may be the computer device 102 shown in FIG. 1, and the server (e.g., HTTP server) 204 may be the computer device 104 shown in FIG. 1. When the processor 114 of the client 202 (computer device 102) executes the program code PROG_1 (e.g., program code of the network speed test software (client edition) that is a part of the program code PROG_1) to start the network speed test (which at least includes a download speed test), the server 204 transmits a plurality of TCP packets to the client 202 for download speed test. In this embodiment, the sequence number of the first TCP packet transmitted by the server 204 (computer device 104) is x (i.e., TCP_SN = x), and the first TCP packet is successfully received by hardware of the client 202 (computer device 102) and then actively discarded for reducing the processor load of the subsequent software processing. During a period in which the network speed test is running, at least one TCP packet transmitted from the server 204 (computer device 104) is lost. For example, a TCP packet with a sequence number of x+1400 (i.e., TCP_SN = x+1400) is not successfully received by the client 202 (computer device 102) . As mentioned above, the client 202 (computer device 102) does not request re-transmission of the TCP packet with the sequence number of x+1400 (i.e., TCP_SN = x+1400) from the server 204 (computer device 104). The server 204 (computer device 104) subsequently transmits a plurality of TCP packets, including a TCP packet with a sequence number of x+1400*2 (i.e., TCP_SN = x+1400*2), a TCP packet with a sequence number of x+1400*3 (i.e., TCP_SN = x+1400*3), and a TCP packet with a sequence number of x+1400*n (i.e., TCP_SN = x+1400*n). These TCP packets are all successfully received by the client 202 (computer device 102), where the TCP packet with the sequence number of x+1400*3 is successfully received by hardware of the client 202 (computer device 102) and then actively discarded for reducing the processor load of the subsequent software processing. Furthermore, in response to receiving the TCP packet with the sequence number of x+1400*n successfully, the client 202 returns an ACK packet with an ACK number of x+1400*n (i.e., ACK_SN= x+1400*n). With the aid of the counter, the hardware of the client 202 (computer device 102) obtains the data amount (e.g., x+1400*(n-1)) of all successfully received TCP packets, including successfully received TCP packets that are actively discarded. Next, the software of the client 202 (computer device 102) computes the download speed (e.g.,

$$\frac{x+1400*(n-1)}{t}$$

) of a network used by the client 202 (computer device 102) through dividing the obtained data amount of TCP packets (e.g., x+1400*(n-1)) by the elapsed time (e.g., t).

Those skilled in the art will readily observe that numerous modifications and alterations of the device and method may be made while retaining the teachings of the invention. Accordingly, the above disclosure should be construed as limited only by the metes and bounds of the appended claims.

**Claims**

1. A computer device (102), comprising:

   a network interface circuit (116), arranged to receive a plurality of first transmission control protocol, in the following also referred to as TCP, packets from another computer device (104);
   a storage device (112), arranged to store a program code; and
   a processor (114), arranged to load and execute the program code to perform following operations:

   instructing the network interface circuit (116) to transmit a plurality of second TCP packets to the another computer device (104), wherein the plurality of second TCP packets comprise a second TCP packet and another second TCP packet that are sequentially transmitted, the second TCP packet is an acknowledgement, in the following also referred to as ACK, packet corresponding to a first TCP packet included in the plurality of first TCP packets, the another second TCP packet is an ACK packet corresponding to another first TCP packet included in the plurality of first TCP packets, and the first TCP packet and the another first TCP packet have discontinuous sequence numbers; and
computing a network speed of a network used by the computer device (102) according to a data amount of the plurality of first TCP packets.

2. The computer device (102) of claim 1, wherein during a period in which the computer device (102) performs a network speed test, the computer device (102) does not request any TCP packet re-transmission from the another computer device (104).

3. The computer device (102) of claim 1 or 2, wherein the network interface circuit (116) is further arranged to actively discard a part of the plurality of first TCP packets that are received, for reducing a load of the processor (114).

4. A computer device (104), comprising:

   a network interface circuit (126);
   a storage device (122), arranged to store a program code; and
   a processor (124), arranged to load and execute the program code to perform following operations:

   instructing the network interface circuit (126) to transmit a first transmission control protocol, in the following also referred to as TCP, packet to another computer device (102); and
   after instructing the network interface circuit (126) to transmit the first TCP packet to the another computer device (102), instructing the network interface circuit (126) to transmit another first TCP packet to the another computer device (102);

   wherein the network interface circuit (126) is further arranged to receive a second TCP packet from the another computer device (102), and the second TCP packet is an acknowledgement, in the following also referred to as ACK, packet corresponding to the another first TCP packet; and before the network interface circuit (126) receives the second TCP packet, the network interface circuit (126) does not receive an ACK packet corresponding to the first TCP packet.

5. The computer device (104) of claim 4, wherein during a period in which the another computer device (102) performs a network speed test, the computer device (104) does not perform any TCP packet re-transmission.

6. A transmission control protocol, in the following also referred to as TCP, packet processing method employed by a computer device, comprising:

   receiving a plurality of first TCP packets from another computer device;
   transmitting a plurality of second TCP packets to the another computer device, wherein the plurality of second TCP packets comprise a second TCP packet and another second TCP packet that are sequentially transmitted, the second TCP packet is an acknowledgement, in the following also referred to as ACK, packet corresponding to a first TCP packet included in the plurality of first TCP packets, the another second TCP packet is an ACK packet corresponding to another first TCP packet included in the plurality of first TCP packets, and the first TCP packet and the another first TCP packet have discontinuous sequence numbers; and
   computing a network speed of a network used by the computer device according to a data amount of the plurality of first TCP packets.

7. The TCP packet processing method of claim 6, wherein during a period in which the computer device performs a network speed test, the computer device does not request any TCP packet re-transmission from the another computer device.

8. The TCP packet processing method of claim 6 or 7, further comprising:
actively discarding a part of the plurality of first TCP packets that are received, for reducing a processor load of the computer device.

9. A transmission control protocol, in the following also referred to as TCP, packet processing method employed by a computer device, comprising:

   transmitting a first TCP packet to another computer device;
   after transmitting the first TCP packet to the another computer device, transmitting another first TCP packet to the another computer device; and
   receiving a second TCP packet from the another computer device, wherein the second TCP packet is an acknowledgement, in the following also referred to as ACK, packet corresponding to the another first TCP packet, and before the second TCP packet is received, an ACK packet corresponding to the first TCP packet is not received.

**10.** The TCP packet processing method of claim 9, wherein during a period in which the another computer device performs a network speed test, the computer device does not perform any TCP packet retransmission.

FIG. 1

EP 4 404 530 A1

FIG. 2

FIG. 3

**EP 4 404 530 A1**

Europäisches
Patentamt
European
Patent Office
Office européen
des brevets

# EUROPEAN SEARCH REPORT

Application Number

EP 23 20 8485

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Anonymous: "Transmission Control Protocol – Wikipedia", , 19 June 2014 (2014-06-19), XP055963487, Retrieved from the Internet: URL:https://en.wikipedia.org/w/index.php?title=Transmission_Control_Protocol&oldid=613539746#Window_scaling [retrieved on 2022-09-21] * the whole document * | 1-10 | INV. H04L47/193 H04L69/16 |
| A | US 2012/209911 A1 (SIGANOS GEORGIOS [ES] ET AL) 16 August 2012 (2012-08-16) * abstract; figure 2 * | 1-10 | |
| A | US 9 100 332 B2 (TANAKA SHINGO [JP]; YAMAURA TAKAHIRO [JP]; TOSHIBA KK [JP]) 4 August 2015 (2015-08-04) * abstract; figures 1, 4 * * column 5, line 49 – column 6, line 30 * | 1-10 | |
| A | CN 107 707 422 A (SICHUAN TIANYI COMHEART TELECOM CO LTD) 16 February 2018 (2018-02-16) * paragraph [0018] – paragraph [0023] * | 1-10 | TECHNICAL FIELDS SEARCHED (IPC) H04L |

The present search report has been drawn up for all claims

| Place of search | Date of completion of the search | Examiner |
|---|---|---|
| Munich | 7 March 2024 | Fantacone, Vincenzo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

............................................................................

& : member of the same patent family, corresponding document

EPO FORM 1503 03.82 (P04C01)

12

## ANNEX TO THE EUROPEAN SEARCH REPORT
## ON EUROPEAN PATENT APPLICATION NO.

**EP 23 20 8485**

This annex lists the patent family members relating to the patent documents cited in the above-mentioned European search report.
The members are as contained in the European Patent Office EDP file on
The European Patent Office is in no way liable for these particulars which are merely given for the purpose of information.

**07-03-2024**

| Patent document cited in search report | | Publication date | Patent family member(s) | | Publication date |
|---|---|---|---|---|---|
| US 2012209911 | A1 | 16-08-2012 | AR | 077471 A1 | 31-08-2011 |
| | | | BR 112012000875 A2 | | 01-03-2016 |
| | | | EP | 2454851 A1 | 23-05-2012 |
| | | | US | 2012209911 A1 | 16-08-2012 |
| | | | UY | 32788 A | 28-02-2011 |
| | | | WO | 2011006531 A1 | 20-01-2011 |
| US 9100332 | B2 | 04-08-2015 | JP | 5361924 B2 | 04-12-2013 |
| | | | JP | 2012182551 A | 20-09-2012 |
| | | | US | 2012218914 A1 | 30-08-2012 |
| CN 107707422 | A | 16-02-2018 | NONE | | |

EPO FORM P0459

For more details about this annex : see Official Journal of the European Patent Office, No. 12/82